Europäisches Patentamt

**European Patent Office**

**Office européen des brevets**

(19)

(11) Numéro de publication: **0018275**
**A1**

(12)
# DEMANDE DE BREVET EUROPEEN

(21) Numéro de dépôt: **80400485.1**

(51) Int. Cl.³: **A 22 C 17/12**

(22) Date de dépôt: **14.04.80**

(30) Priorité: **18.04.79 BE 875684**

(43) Date de publication de la demande: **29.10.80**
**Bulletin 80/22**

(84) Etats contractants désignés: **DE GB SE**

(71) Demandeur: **S.P.R.L. FRANCE NET, 182- 184 Rue Belvaux, B-4030 Grivenee (BE)**

(72) Inventeur: **Gregoire, Donald, 11 Rue Eugène Gibez, FR-75015 Paris (FR)**

(74) Mandataire: **Ecrepont, Robert Pierre, 12 Place Simon Vollant, F-59800 Lille (FR)**

(54) Machine pour découper une tranche de produit.

(57) Un porte lame (4) est associé directement au bâti (14) par engagement de chacun de ses tourillons (13) dans une fente (15) de largeur correspondant au diamètre du tourillon, et qui est exécutée dans chacune des parois latérales (16) du bâti selon une direction longitudinale sensiblement radiale par rapport au rouleau (2).

Application à l'industrie mécanique et notamment de la construction de machines pour le traitement de la viande et du poisson notamment pour le dépouiller.

## Machine pour découper une tranche de produit.

L'invention se rapporte à une machine pour découper une tranche de produit tel un quartier de viande ou un poisson, notamment pour le dépouiller.

On connaît déjà de telles machines (brevet GB 621825) dans lesquelles une table permet de conduire le produit sur un rouleau qui l'entraîne alors contre le tranchant d'une lame que son porte-lame tient à distance convenable du rouleau.

Cette lame détache ainsi une tranche qui reste momentanément collée au rouleau.

Afin de pouvoir détacher la tranche du rouleau, celui-ci est creusé de rainures dans lesquelles s'engagent des organes détacheurs qui s'insèrent sous la tranche et la décolle.

Cette adhérence de la tranche sur une portion angulaire de rouleau est nécessaire pour que la pièce soit entraînée vers la lame.

Elle est donc sciemment provoquée et, à cet effet :

- le rouleau est strié et
- le porte lame présente un sabot de pression appuyant la tranche sur le rouleau.

Ce sabot du porte lame est suspendu à un axe parallèle à l'axe du rouleau pour réaliser un balancier afin qu'un écartement par rapport au rouleau d'un bord du sabot du porte lame accentue l'appui de l'autre bord et maintienne la pression nécessaire pour obtenir l'adhérence suffisante de la tranche et ramener rapidement le premier bord en position normale.

Un tel mouvement peut par exemple être provoqué par une surépaisseur locale de la tranche par suite de la présence d'un nerf ou de tout autre élément plus résistant.

Ce soulèvement d'un bord du sabot du porte lame nécessite évidemment que son axe de suspension puisse déjà reculer légèrement par rapport au rouleau.

Cet axe de suspension doit donc être porté par le bâti de la machine de manière telle qu'il reçoive la force de pression du sabot du porte lame sur le rouleau mais puisse néanmoins s'écarter de ce rouleau dans le cas d'un effort anormal sur la lame.

Par ailleurs, pour parvenir au démontage de la lame ou du porte lame ainsi que pour nettoyer le rouleau, le porte lame, sans qu'il soit alors nécessaire qu'il reçoive encore la force de pression précitée, doit aussi pouvoir reculer de manière nettement plus importante que ci-dessus.

Afin de satisfaire à ces exigences, dans les machines connues à ce jour, l'axe de suspension du porte lame est associé, à chacune de ses extrémités, par un levier articulé autour d'un axe du bâti et qui, au moins lorsque le porte lame est proche du rouleau, est sollicité vers ce rouleau par un fort ressort.

Etant donné le débattement important, de l'axe de suspension du porte lame, les leviers sont très longs et de ce fait leurs axes d'articulation sur le bâti sont généralement situés en arrière et surtout nettement en-dessous de l'axe de suspension, ce qui majore fortement la hauteur, le poids et le prix du bâti de la machine.

Comme d'autre part, les deux tourillons, qui aux extrémités du porte lame matérialisent son axe de suspension, doivent pouvoir être dégagés des leviers, l'association des tourillons aux leviers nécessite des moyens spécialement adaptés tels des fourches qui compliquent fortement la fabrication et le montage.

Un résultat que l'invention vise à obtenir est une telle machine dans laquelle, pour son association au bâti, l'axe de suspension du porte lame ne fait pas appel à des leviers, et ce, tout en permettant néanmoins à cet axe de suspension:

- de reculer plus ou moins par rapport au rouleau
- de recevoir sa sollicitation vers ce rouleau.

Un autre résultat de l'invention, lequel découle directement de la suppression des leviers, est une telle machine qui, ayant une faible hauteur et un faible poids, peut ainsi être posée sur un piètement indépendant ou un e table.

Est également un résultat de l'invention une machine dont les tourillons matérialisant l'axe de suspension du porte lame sont de montage/démontage très rapide et extrêmement facile.

Pour cela l'invention a pour objet une machine du type cité plus haut, notamment caractérisée en ce que le porte lame est associé directement au bâti par engagement de chacun de ses tourillons dans une fente de largeur correspondant au diamètre du tourillon, et qui est exécutée dans chacune des parois latérales du bâti selon une direction longitudinale sensiblement radiale par rapport au rouleau.

L'invention sera bien comprise à l'aide de la description ci-après faite, à titre d'exemple non limitatif, en regard du dessin ci-annexé qui représente schématiquement :

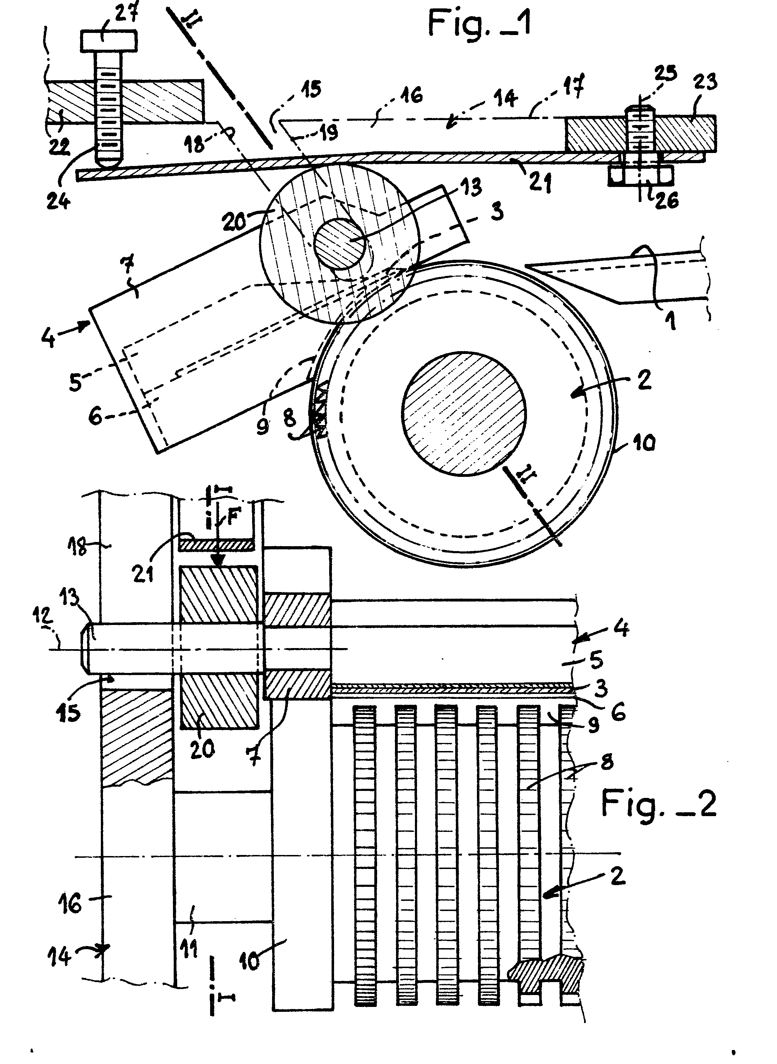

figure 1 : la machine vue en coupe transversale (selon I-I de la figure 2)

figure 2 : une coupe selon II II de la figure 1.

En se reportant au dessin, on voit que la machine comprend une table 1 permettant de conduire un poisson ou un quartier de viande sur un rouleau 2 qui l'entraîne alors sur le tranchant d'une lame 3 que son porte lame 4 tient à distance convenable du rouleau 2.

Le porte lame 4 comprend par exemple deux mors 5,6, pinçant la lame 3 et dont l'un d'eux est solidaire de deux joues 7. La lame 3 détache ainsi une tranche de produit qui reste momentanément collée sur le rouleau 2 qui à cet effet présente des stries 8 qui s'ancrent dans le produit.

De plus, toujours dans le but de faire adhérer la tranche sur le rouleau, le mors inférieur 6 du porte lame a sa face 9 tournée vers le rouleau qui épouse sensiblement la courbe dudit rouleau pour former un sabot appuyant la tranche sur le rouleau.

Un élément élastique, décrit plus loin, communique au porte lame la force de pression du sabot sur la tranche. Afin que la place nécessaire à la tranche soit néanmoins réservée entre le sabot et le rouleau, des butées sont prévues sous la forme de bagues lisses 10, libres en rotation autour de l'axe 11 du rouleau et sur lesquelles reposent les joues 7 du porte lame.

Le porte lame avec son sabot 9 est suspendu à un axe 12 matérialisé, pour le porte lame, par deux tourillons 13 fixés chacun à l'une de ses joues 7.

De ce fait, le sabot peut osciller légèrement à la manière d'un balancier, et ce, tout en continuant de recevoir la pression nécessaire à l'adhérence de la tranche sur le rouleau, alors que les tourillons 13 doivent, en cas d'effort anormal, pouvoir reculer légèrement par rapport au rouleau 2. Ils doivent de plus permettre un retrait total du porte lame pour le nettoyage.

Afin de satisfaire à ces exigences, selon une caractéristique essentielle de l'invention, le porte lame 4 est associé directement au bâti 14 et ce par engagement de chacun de ses tourillons dans une fente 15 exécutée dans chacune des parois latérales 16 de ce bâti selon une direction longitudinale sensiblement radiale par rapport au rouleau 2 et dont la largeur correspondant au diamètre du tourillon.

Au moins l'une des fentes 15 débouche avantageusement sur le dessus 17 des parois latérales 16, ce qui permet un dégagement rapide et simple du porte lame 4 qui, au montage, trouve sa position angulaire correcte par l'immobilisation des tourillons 13 entre les faces 18,19 des fentes 15 et sa distance exacte par rapport au rouleau par butée des joues 7 du porte lame 4 sur les bagues lisses 10 précitées.

Quant au moyen sollicitant élastiquement le porte lame vers le rouleau 2, pour communiquer au sabot 9 sa force d'appui sur la tranche, il suffit de deux ressorts prenant appui sur le bâti pour solliciter chacun de leur côté l'un des tourillons.

Est également une caractéristique de l'invention, le fait que chaque ressort agisse sur le tourillon 13 correspondant par l'intermédiaire d'une pièce telle une bague 20 à l'intérieur de laquelle le tourillon 13 peut osciller et même tourner librement.

Selon une autre caractéristique essentielle de l'invention, chacun des ressorts sollicitant les tourillons 13 vers le rouleau 2 est constitué par un simple ressort à lame 21.

Dans un mode préféré de réalisation, ce ressort à lame 21 appuie par sa partie médiane sur le dessus de la bague

0018275

20 du tourillon 13, alors que ses extrémités prennent appui sous des pièces solidaires du bâti, telles des pattes 22,23.

Pour au moins l'une de ces pattes, l'appui de la lame de ressort s'opère par l'intermédiaire d'une vis de pression 24 permettant de régler ou d'annuler la force F exercée par le ressort 21 sur la bague 20.

De manière avantageuse, l'une des extrémités de la lame de ressort est articulée sous sa patte d'appui autour d'un axe 25 sensiblement vertical, par exemple matérialisé par une vis 26, ce qui permet, de préférence après annulation de la force F, de dégager la lame de ressort 21 de la bague et autorise ainsi la sortie du tourillon 13 de la fente 15.

Pour faciliter la manoeuvre de la vis de pression 24, celle-ci peut présenter une tête 27 pourvue de moyens facilitant sa préhension à la main.

Ainsi dépourvue des longs leviers qui dans les machines connues sont articulés très nettement sous le rouleau et conduisent donc à des machines très hautes à poser au sol, la machine selon l'invention a une hauteur qui peut, pratiquement être limitée au diamètre du rouleau. Elle est alors légère, peu encombrante, d'un faible prix de revient et peut surtout trouver place sur un support indépendant tel une table ou un piètement indépendant.

Ainsi privée de socle abritant la tringlerie ou la filerie d'une commande qui, pour laisser libres les mains de l'opérateur, s'opère généralement par pédale, cette commande de la machine peut être obtenue par des genouillères portées par des tringles articulées à l'avant de la machine et descendant devant la table ou le piètement jusqu'à hauteur des genoux de l'opérateur.

REVENDICATIONS

1. Machine pour découper une tranche de produit et comprenant, entre les parois latérales (16) d'un bâti (14), une lame (3) et un rouleau (2), lequel entraîne le produit contre le tranchant de ladite lame qui est tenue à distance convenable du rouleau par un porte lame (4) qui présente un sabot de pression (9) qu'un moyen élastique (21) sollicite vers le rouleau (2) pour y appuyer la tranche de produit ainsi que deux joues extrêmes (7) venant en butée sur deux bagues (10) coaxiales à l'axe (11) du rouleau, lequel porte lame (4) est suspendu à un axe (12) parallèle à l'axe du rouleau, matérialisé par deux tourillons (13) associés chacun, d'une part, à l'une des joues (7) du porte lame (4) et, d'autre part, au bâti (14) par un moyen permettant au porte lame, tant un léger recul par rapport au rouleau sans relâcher la pression du sabot qu'un recul plus important voire un retrait, cette machine étant c a r a c t é r i s é e en ce que le porte lame (4) est associé directement au bâti par engagement de chacun de ses tourillons (13) dans une fente (15) de largeur correspondant au diamètre du tourillon, et qui est exécutée dans chacune des parois latérales (16) du bâti (14) selon une direction longitudinale sensiblement radiale par rapport au rouleau.

2. Machine selon la revendication 1, caractérisée en ce qu'au moins l'une des fentes (15) débouche sur le dessus (17) de la paroi latérale (16) dans laquelle elle est exécutée.

3. Machine selon la revendication 1 ou 2, dans laquelle le moyen élastique (21) sollicitant le sabot vers le rouleau consiste en des ressorts qui, associés au bâti, agissent sur les tourillons, caractérisée en ce que chaque ressort agit sur le tourillon par l'intermédiaire d'une pièce (20) à l'intérieur de laquelle le tourillon (13) peut osciller librement.

4. Machine selon l'une quelconque des revendications 1 à 3, dans laquelle le moyen élastique (21) sollicitant le sabot vers le rouleau consiste en des ressorts qui, associés au bâti, agissent sur les tourillons (13),

caractérisée en ce que chacun des ressorts (21) est constitué d'un simple ressort à lame.

5. Machine selon la revendication 4, caractérisée en ce que chaque lame (21) de ressort appuie par sa partie médiane sur le dessus du tourillon (13), alors que ses extrémités prennent appui sous des pièces (22-23) solidaires du bâti (14).

6. Machine selon la revendication 5, caractérisée en ce que, sous au moins l'une (22) de ces pièces (22-23) solidaires du bâti (14), l'appui de l'extrémité correspondante de la lame du ressort (21) s'opère par l'intermédiaire d'une vis de pression (24).

7. Machine selon la revendication 6, caractérisée en ce que la vis de pression (24) présente une tête (27) de manoeuvre pourvue de moyens facilitant sa préhension à la main.

8. Machine selon la revendication 5 ou 6, caractérisée en ce que l'une des extrémités de la lame de ressort (21) est articulée sous la pièce (23) solidaire du bâti (14), autour d'un axe (25) sensiblement vertical.

9. Machine selon l'une quelconque des revendications 1 à 8, caractérisée en ce que son bâti (14) a une hauteur à peine supérieure au diamètre du rouleau et en ce que cette machine, appelée à être disposée sur un support indépendant, comprend pour sa commande au moins une genouillère portée par une tringle articulée à l'avant de la machine et descendant à hauteur du genou en passant par devant le support.

0018275

Fig._1

Fig._2

Office européen
des brevets

**RAPPORT DE RECHERCHE EUROPEENNE**

0018275

Numéro de la demande

EP 80 40 0485

## DOCUMENTS CONSIDERES COMME PERTINENTS

| Catégorie | Citation du document avec indication, en cas de besoin, des parties pertinentes | Revendication concernee |
|---|---|---|
| | <u>FR - A - 2 391 039</u> (VARLET)<br>* Page 1, lignes 24-32; page 2, lignes 25-30; page 3, ligne 27 à page 4, ligne 29; page 5, lignes 4-14; revendication 3 *<br><br>-- | 1,2 |
| | <u>US - A - 1 376 810</u> (HIEATZMAN)<br>* Page 1, lignes 38-43; figures 1,2 *<br><br>-- | 1,2,3 |
| | <u>GB - A - 746 310</u> (WOLVIERINE)<br>* Page 1, lignes 61-80 *<br><br>-- | 4,6 |
| | <u>US - A - 1 790 592</u> (MORRISON)<br>* Page 2, lignes 11-29 *<br><br>-- | 1,2 |
| | <u>GB - A - 451 067</u> (TRIGGS)<br>* Page 1, lignes 85-105; page 2, lignes 61-68 *<br><br>-- | 5,6,8 |
| | <u>GB - A - 1 095 300</u> (DIENNES WERKE)<br>* Page 1, ligne 87 à page 2, ligne 21 *<br><br>---- | 4,6,7 |

**CLASSEMENT DE LA DEMANDE (Int. Cl. 3)**

A 22 C 17/12

**DOMAINES TECHNIQUES RECHERCHES (Int. Cl. 3)**

A 22 C
B 26 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achevement de la recherche | Examinateur |
|---|---|---|
| La Haye | 04-07-1980 | DE LAMEILLEURE |

OEB Form 1503.1 06.78